# EUROPÄISCHE PATENTSCHRIFT

(11) **EP 4 081 716 B1**
(45) Veröffentlichungstag und Bekanntmachung des Hinweises auf die Patenterteilung: **12.04.2023**
(21) Anmeldenummer: 21714839.4
(22) Anmeldetag: 19.03.2021
(51) Int. Cl.: F16B 5/00, F16B 5/06

(54) **PROFILVERBUND**
INTERCONNECTED PROFILE ARRANGEMENT
AGENCEMENT DE PROFILÉS INTERCONNECTÉS

(43) Veröffentlichungstag der Anmeldung: 02.11.2022
(73) Patentinhaber: Otto Fuchs - Kommanditgesellschaft -, 58540 Meinerzhagen (DE)
(72) Erfinder: KERSTEN, Sebastian, 585401 Meinerzhagen (DE); THOMZICK, Gerd, 51709 Marienheide (DE); ANDERS, Stefan, 58540 Meinerzhagen (DE)
(74) Vertreter: Haverkamp Patentanwälte PartG mbB
(86) Internationale Anmeldenummer: PCT/EP2021/057097
(87) Internationale Veröffentlichungsnummer: WO 2022/194388

(56) Entgegenhaltungen:
- EP-A1- 1 426 263
- EP-A1- 3 712 444
- WO-A1-2019/154500

## Beschreibung

Die Erfindung betrifft einen Profilverbund hergestellt aus einem ersten Profil und einem längsseitig mit dem ersten Profil durch Kaltfügen verbundenen zweiten Profil aus Metall, welche beiden Profile an ihren zueinander weisenden Längsseiten komplementäre Verklammerungsstrukturen zum Kaltfügen der beiden Profile durch eine in Profilhochrichtung (z-Richtung) wirkende Fügekraft tragen, wobei das erste Profil als Verklammerungsstruktur einen an einem Steg angeformten, durch eine größere Erstreckung in Profilquerrichtung (y-Richtung) in Bezug auf diejenige des Steges zu beiden Seiten des Steges jeweils eine Hinterschneidung bildenden Verklammerungskopf und die dazu komplementäre Verklammerungsstruktur des zweiten Profils eine Verklammerungskopfaufnahme zur Aufnahme eines Abschnittes des Verklammerungskopfes des ersten Profils sowie einen angeformten Umklammerungsschenkel mit einem vor dem Kaltfügen abragenden ersten Profilarm und mit einem zweiten, daran winklig angeformten Profilarm aufweisen, dessen freies Ende zum Hintergreifen des Verklammerungskopfes vorgesehen ist, wobei das freie Ende des Umklammerungsschenkels in dem kaltgefügten Profilverbund in die Verklammerungstasche, den Verklammerungskopf des anderen Profils hintergreifend, eingepresst ist.

Ein aus einem ersten Metallprofil und einem längsseitig mit diesem durch Kaltfügen verbundenen zweiten Metallprofil hergestellter Profilverbund ist aus DE 20 2005 008 016 U1 bekannt. Bei diesem vorbekannten Profilverbund sind zwei Profile längsseitig in Richtung der Längserstreckung des Profils formschlüssig in der Ebene des Profilverbundes miteinander verbunden. Zu diesem Zweck ist an einen Gurt eines solchen Profils längsseitig jeweils eine Hakenleiste angeformt. Die durch die Hakenvorsprünge bewirkte Hakenausbildung der beiden miteinander in Eingriff zu stellenden Hakenleisten ist jeweils in die entgegengesetzte Richtung weisend, so dass die beiden Hakenleisten klauenartig mit ihren Hakenvorsprüngen miteinander in Eingriff gestellt werden können und in dem erstellten Profilverbund in dieser Art und Weise miteinander in Eingriff gestellt sind. Auf diese Weise sind die beiden Profile in der Profilebene quer zu ihrer Längserstreckung formschlüssig miteinander verbunden. Der Hakenvorsprung der Hakenleiste des ersten Profils ist durch einen Verankerungskanal bereitgestellt, in den durch einen Kaltfügeprozess der Hakenvorsprung der Hakenleiste des zweiten Profils in den durch den Verankerungskanal bereitgestellten Hinterschnitt eingreifend eingebogen wird. Bei diesem vorbekannten Profilverbund ist an die Hakenleiste zweiten Profils eine Stellleiste angeformt. Die Stellleiste ist rückseitig an die Hakenleiste bezüglich des Hakenvorsprunges angeformt. Vor Erstellen des Profilverbundes befindet sich diese in einer Stellung, damit durch eine Kraftbeaufschlagung quer zur Höhe der Profile diese zusammen mit dem Hakenvorsprung in den Hinterschnitt des Verankerungskanals des ersten Profils eingepresst werden kann. Die Stellleiste selbst ist in dem erstellten Profilverbund an einer dem Hakenvorsprung gegenüberliegenden Seitenwand des Verankerungskanals abgestützt, um die Stellleiste an dieser Stelle ihrer Längserstreckung folgend festzulegen. Damit stellt bei diesem Stand der Technik die Stellleiste zugleich die Klemmleiste des Profilverbundes dar.

Bei diesem vorbekannten Profilverbund greift der Hakenvorsprung der Hakenleiste, an den die Stellleiste angeformt ist, in den Hinterschnitt des Verankerungskanals des ersten Profils ein. Der Hakenvorsprung ist innerhalb des Verankerungskanals an diesem nicht abgestützt. Das Widerlager zu der Abstützung der Stellleiste an der Seitenwand des Verankerungskanals befindet sich an der Außenseite des Hakenvorsprungs des ersten Profils. Zwischen der Außenfläche der Stellleiste und dem Boden des Verankerungskanals verbleibt ein Spalt. Dieser kann, wenn eine Wasserdichtigkeit oder eine dämpfende Wirkung in dem Profilverbund erzielt werden soll, zum Einbringen einer Füllmasse genutzt werden.

Ein gattungsgemäßer Profilverbund ist aus DE 38 06 091 A1 bekannt. Bei diesem Profilverbund verfügt das erste Profil als Verklammerungsstruktur über einen Verklammerungskopf, angeformt an einen Steg, der von der Profilaußenseite in Richtung zum Profilinneren hin ausgerichtet ist. Das zweite Profil trägt als komplementäre Verklammerungsstruktur eine Verklammerungskopfaufnahme, in die zur Verklammerung der beiden Profile miteinander ein Abschnitt des Verklammerungskopfes eingreift. In Verlängerung des profilinnenseitigen Schenkels der Verklammerungskopfaufnahme ist ein Umklammerungsschenkel angeformt, der vor dem Kaltfügen aus der Profilebene nach innen abragt. Die Verklammerungskopfaufnahme ist dann in Querrichtung der Profillängserstreckung offen, so dass der Verklammerungskopf des anderen Profils darin eingeschoben werden kann. Verriegelt wird der mit einem Abschnitt in die Verklammerungskopfaufnahme eingreifende Verklammerungskopf durch Umlegen des Umklammerungsschenkels, dessen freies Ende in eine durch den Verklammerungskopf und den Steg gebildete Tasche eingreift. Durch Umformen des Umklammerungsschenkels wird eine unlösbare Verbindung der beiden Profile und damit der gewünschte Profilverbund hergestellt.

Ein weiterer gattungsgemäßer Profilverbund ist aus EP 3 712 444 A1 bekannt. Gefügt werden die zu einem Profilverbund zu verbindenden Profile durch eine Fügekraft, die in Profilhochrichtung (z-Richtung) wirkt. Der Fügedruck wird durch zwei miteinander kooperierende Werkzeuge bereitgestellt. Ist ein Hohlkammerprofil auszubilden, sind die beiden Gurte der Profile durch zumindest einen Profilsteg miteinander verbunden. Dieser ist ausgelegt, dem auf die Außenseiten der Profile wirkenden, für den Kaltfügeprozess benötigten Umformdruck standzuhalten. Damit werden die an den beiden Enden eines solchen Profilsteges befindlichen Verklammerungsstrukturen in ein und demselben Kaltfügeschritt zur Erstellung des Profilverbundes umgeformt. Bei dem Kaltfügen kann es vorkommen, dass beide Profile nicht in ihrer bestimmungsgemäßen Anordnung zueinander verbleiben, sondern geringfügig gegeneinander versetzt werden. Überdies besteht der Wunsch, höhere Fügekräfte aufzubringen. Mit steigenden Fügekräften beim Kaltfügen steigt jedoch die Gefahr einer unerwünschten Verstellung der beiden Profile zueinander.

Somit liegt der Erfindung die Aufgabe zugrunde, einen diesbezüglich verbesserten Profilverbund bzw. für einen solchen verbesserten Profilverbund ausgelegte Profile vorzuschlagen.

Gelöst wird diese Aufgabe erfindungsgemäß durch einen eingangs genannten, gattungsgemäßen Profilverbund, bei dem die miteinander durch Kaltfügen verbundenen Profile in Profilhochrichtung (in z-Richtung) durch zu den Verklammerungsstrukturen zusätzliche Verriegelungsglieder formschlüssig miteinander in Eingriff gestellt sind, wobei das den Verklammerungskopf tragende erste Profil an seiner zu dem zweiten Profil weisenden und diese kontaktierenden Seite ein erstes Verriegelungsglied und das zweite Profil an entsprechender Stelle ein komplementäres, mit dem ersten Verriegelungsglied in Eingriff gestelltes zweites Verriegelungsglied aufweisen, durch welche in Eingriff gestellten Verriegelungsglieder die beiden Profile in Profilhochrichtung (z-Richtung) formschlüssig miteinander in Eingriff gestellt sind.

Die im Rahmen dieser Ausführungen verwendeten Profilrichtungen z-Richtung, y-Richtung und/oder x-Richtung entsprechen folgenden Richtungen: z-Richtung: Profilhochrichtung; y-Richtung: Profilquererstreckung (Profilierungsrichtung); x-Richtung: Profillängserstreckung.

Bei diesem Profilverbund sind die miteinander durch Kaltfügen zu verbindenden Profile in Profilhochrichtung (z-Richtung) durch zu den Verklammerungsstrukturen zusätzliche Verriegelungsglieder formschlüssig miteinander in Eingriff gestellt. Jedes Profil verfügt über zumindest ein Verriegelungsglied, wobei die Verriegelungsglieder der beiden Profile komplementär ausgelegt sind. Eines der beiden Profile trägt an seiner zu dem anderen Profil weisenden Seite zumindest ein positives Verriegelungsglied, beispielsweise einen Verriegelungswulst. Das andere Profil trägt an entsprechender Stelle an seiner zu dem das positive Verriegelungsglied tragenden Profil weisenden Seite ein negatives Verriegelungsglied, beispielsweise eine Verriegelungswulstaufnahme, mithin eine Nut. Die Verriegelungsglieder erstrecken sich typischerweise über die gesamte Längserstreckung (x-Richtung) der Profile, sind mithin bei einem stranggepressten Profil durch den Strangpressvorgang mitgeformt. Es versteht sich, dass jedes Profil auch mehrere Verriegelungsglieder tragen kann, insbesondere auch beispielsweise ein positives und ein hierzu benachbartes negatives Verriegelungsglied. Durch den durch die Verriegelungsglieder hergestellten, in z-Richtung wirkenden Formschluss ist eine Relativbewegung zwischen den beiden Profilen bei dem Vorgang des Kaltfügens wirksam blockiert, sodass für den Umformprozess deutlich höhere Fügekräfte aufgewendet werden können, ohne dass die Gefahr besteht, dass der Verklammerungskopf aus seinem Eingriff in die Verklammerungskopfaufnahme, etwa bei ungünstiger Profilabstützung, herausgedrückt werden kann.

Durch die vorbeschriebene formschlüssige Ineingriffstellung der beiden Profile ist ein wirksames Widerlager für auf eine Außenseite der vormontierten Profile wirkenden Umformkraft geschaffen, durch das die angelegte Fügekraft in den an zumindest einen der beiden Verklammerungsstrukturen angeformten Profilsteg eingeleitet und an dem Gegenwerkzeug als Widerlager aufgefangen wird.

Vorzugsweise sind die miteinander in Eingriff gestellten Verriegelungsglieder nicht nur in z-Richtung formschlüssig miteinander verbunden, sondern auch in y-Richtung, und zwar in diejenige Richtung, in der die beiden Profile voneinander getrennt werden könnten. Sodann ist auch in dieser Richtung ein Formschluss bereitgestellt. Dieses kann auch zur Vormontage von zwei Profilen, insbesondere von zwei zweigurtigen Profilen genutzt werden, um diese miteinander zu verklipsen. Dies erleichtert das nachfolgende Kaltfügen. Verwirklicht werden kann ein solcher Eingriff zweier Verriegelungselemente dadurch, dass das positive Verriegelungselement, beispielsweise ein Verriegelungswulst mit seiner Längsachse entsprechend geneigt ist.

Zumindest ein komplementäres Verriegelungsgliedpaar befindet sich gemäß einer bevorzugten Ausgestaltung innerhalb oder in unmittelbarer Nachbarschaft zu der Verklammerungskopfaufnahme. Zweckmäßig ist eine Ausgestaltung, bei der das Verriegelungsgliedpaar die Verklammerungskopfaufnahme begrenzt. Im ersteren Fall befinden sich diese an derjenigen Wand der Verklammerungskopfaufnahme, die dem Umklammerungsschenkel gegenüberliegt.

Vorteilhaft ist eine Auslegung des Profilverbundes, bei dem die miteinander in Eingriff gestellten Verriegelungsglieder in oder in unmittelbarer Nachbarschaft zu der Verklammerungskopfaufnahme angeordnet sind, sodass der über den Umklammerungsschenkel in den Verklammerungskopf eingeleitete Fügedruck unmittelbar auf die miteinander in Eingriff gestellten Verriegelungsglieder wirkt. Dieses bedingt eine Selbstverriegelung, durch die der Verklammerungskopf formschlüssig innerhalb der Verklammerungskopfaufnahme auch bei höheren anliegenden Fügedrücken verbleibt. Die Querschnittsfläche des positiven Verriegelungsgliedes ist hinreichend groß gewählt, dass bei den anliegenden Kaltfügekräften ein Abscheren desselben von dem Profil ausgeschlossen werden kann.

Die Möglichkeit, höhere Fügekräfte auf die miteinander in Eingriff gestellten Verklammerungsstrukturen wirken zu lassen, kann genutzt werden, um in Profilquerrichtung (y-Richtung) den Umklammerungsschenkel auch nahe seiner Wurzel und nicht nur mit seinem den Verklammerungskopf hintergreifenden zweiten Profilarm formschlüssig in Eingriff zu stellen. Hierzu ist in einem Ausführungsbeispiel vorgesehen, dass die nach außen weisende Seite des Verklammerungskopfes einen in y-Richtung wirkenden Hinterschnitt aufweist. In diesen wird Material des Umklammerungsschenkels bei dem Vorgang des Kaltfügens eingepresst. Durch dieses Material wird bzw. ist der Hinterschnitt des Verklammerungskopfes verfüllt. Besonders vorteilhaft ist eine Ausgestaltung, bei der der Umklammerungsschenkel an seiner Außenseite eine Materialvorgabe trägt, mithin eine Materialansammlung, von der zum Bereitstellen einer ebenen Außenseite des Umklammerungsschenkels nach dem Kaltfügen entsprechend Material des Umklammerungsschenkels in den Hinterschnitt eingepresst wird. Der Hinterschnitt grenzt vorzugsweise mit einer geneigt ausgeführten Kontur an den in die Verklammerungskopfaufnahme eingreifenden, benachbarten Abschnitt desselben. Durch eine solche Ausführung der Hinterschnittbegrenzung ist infolge der geneigten Kontur eine Stellfläche bereitgestellt, durch die die grundsätzlich in z-Richtung wirkende Umformkraft auch in ein in die Verklammerungskopfaufnahme des anderen Profils gerichtetes Kraftmoment umgesetzt wird. Durch diese Maßnahme ist die Zugbelastbarkeit des Profilverbundes in y-Richtung nochmals deutlich verbessert.

In einem bevorzugten Ausführungsbeispiel ist vorgesehen, dass der außenseitige Hinterschnitt des Verklammerungskopfes und das Verriegelungsglied einander auch in etwa in z-Richtung gegenüberliegen, vorzugsweise dann, wenn das den Verklammerungskopf tragende erste Profil als Verriegelungsglied ein negatives Verriegelungsglied trägt. Der Verklammerungskopf ist mit seinem in die Verklammerungskopfaufnahme des anderen Profils hineinreichenden Abschnitt dann beidseitig formschlüssig darin gehalten. Des Weiteren wird der Verklammerungskopf dann zwischen dem Umklammerungsschenkel und dem bezüglich der Verklammerungskopfaufnahme gegenüberliegenden Verriegelungsglied sicher in der Verklammerungskopfaufnahme gehalten. Handelt es sich bei dem den Verklammerungskopf tragenden Profil ebenfalls um ein Metallprofil, kann durch den Kaltfügeprozess Material desselben in den Hinterschnitt eingepresst werden, was wiederum bedingt, dass aufgrund des typischerweise hohen Fügedrucks auf die miteinander in Eingriff gestellten Verbindungsglieder Sorge dafür getragen ist, dass sich zwischen den in Eingriff gestellten Verriegelungsgliedern eine metallische Dichtung ausbildet.

Die Möglichkeit, höhere Kaltfügekräfte aufbringen zu können, ohne eine Profilverstellung unter Umständen in Kauf nehmen zu müssen, kann bei einer Auslegung des den Verklammerungskopf tragenden Profils als Metallprofil ebenfalls genutzt werden, um denjenigen Abschnitt des Verklammerungskopfes, der zum ersten Profil weist und der die Verklammerungstasche begrenzt, ebenfalls umzuformen, damit dieser zwischen dem ersten Profilarm und dem zweiten Profilarm des Umklammerungsschenkels eingepresst wird. Zu diesem Zweck ist gemäß einem Ausführungsbeispiel die lichte Weite zwischen dem ersten Profilarm und dem zweiten Profilarm kleiner als der darin eingreifende Abschnitt des Verklammerungskopfes vor Erstellung des Profilverbundes. Durch die Umformung dieses Abschnittes des Verklammerungskopfes wird Material von diesem Abschnitt in eine durch die beiden Profilarme des Umklammerungsschenkels gebildete zweite Verklammerungskopfaufnahme eingepresst. Durch diese Relativbewegung zwischen Material des Verklammerungskopfes und dem Umklammerungsschenkel wird auch diesbezüglich eine metallische Dichtung ausgebildet.

Zur weiteren Verbesserung einer metallischen Abdichtung von zwei in dem Profilverbund miteinander in Eingriff gestellten metallischen Verklammerungsstrukturen ist in einem Ausführungsbeispiel vorgesehen, dass die Wände der Verklammerungstasche des ersten Profils in Richtung zur Sohle hin aufeinander zulaufen, mithin geneigt zueinander angeordnet sind, während der zweite Profilarm an den diesbezüglichen Kontaktflächen eine konstante oder nur mit einem kleineren Verjüngungswinkel sich in Richtung zu seinem freien Ende hin reduzierenden Materialstärke aufweist.

Die vorbeschriebenen Verklammerungsstrukturen und der daraus erstellte Profilverbund können bei einschaligen und auch bei zweischaligen Profilen ausgebildet werden. Bei zweischaligen Profilen sind die die beiden Gurte jedes Profils verbindenden Verklammerungsstrukturen durch einen Profilsteg, der sich in z-Richtung erstreckt, voneinander beabstandet. Zumindest an eine der beiden Verklammerungsstrukturen eines Gurtes ist ein solcher Profilsteg angeformt. Dann ist dasjenige Profil, an dem der Profilsteg angeformt ist, an seiner zu dem anderen Profil weisenden Seite geschlossen, während das andere Profil an dieser Seite offen sein kann. Ebenfalls möglich ist, dass an die Verklammerungsstrukturen beider Profile ein Profilsteg angeformt ist. Dann sind beide miteinander in Eingriff gestellten Profile an ihren zueinander weisenden Seiten geschlossen. An den anderen Enden des oder der Profilstege sind zur Verbindung des anderen Gurtes ebenfalls Verklammerungsstrukturen angeformt.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht eines ersten, beispielhaften, aus zwei Profilen erstellten Profilverbundes,
- **Fig. 2:**: eine Stirnseitenansicht des Profilverbundes der Figur 1,
- **Fig. 3:**: einen Ausschnitt aus dem Profilverbund der Figur 2 mit den miteinander in Eingriff gestellten, jedoch noch nicht kaltgefügten Verklammerungsstrukturen der beiden Profile,
- **Fig. 4:**: eine Detaildarstellung der in dem Profilverbund der Figuren 1 und 2 miteinander in Eingriff gestellten Verklammerungsstrukturen,
- **Fig. 5:**: die miteinander in Eingriff gestellten und kaltgefügten Verklammerungsstrukturen der Figur 3,
- **Fig. 6:**: eine Detaildarstellung der in dem Profilverbund miteinander in Eingriff gestellten Verklammerungsstrukturen gemäß einem weiteren Ausführungsbeispiel,
- **Fig. 7:**: die miteinander in Eingriff gestellten Verklammerungsstrukturen der Figur 6 vor dem Kaltfügen und
- **Fig. 8:**: die miteinander in Eingriff gestellten und kaltgefügten Verklammerungsstrukturen der Figur 7.

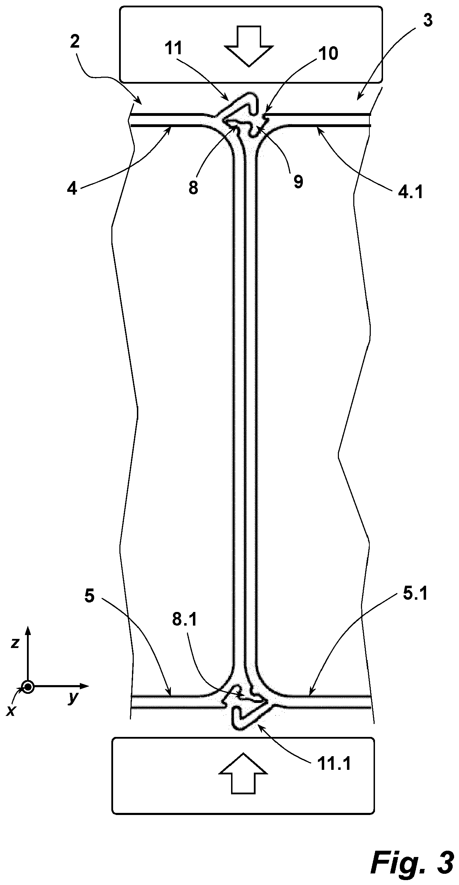

Ein Profilverbund 1 des dargestellten Ausführungsbeispiels ist aus zwei Profilen 2, 3 zusammengesetzt. Bei den Profilen 2, 3 handelt es sich um stranggepresste Profile aus einer Aluminiumlegierung. Beide Profile 2, 3 sind identisch und bei dem dargestellten Ausführungsbeispiel als Hohlkammerprofil ausgelegt. Jedes Profil umfasst einen ersten Gurt 4, 4.1, einen von diesem in Profilhochrichtung (z-Richtung) beabstandeten zweiten Gurt 5, 5.1, welche beiden Gurte 4, 5; 4.1, 5.1 durch Profilstege 6, 6.1 bzw. 7, 7.1 miteinander verbunden sind. An den längsseitigen Kanten tragen die Profile 2, 3 Verklammerungsstrukturen, durch die die beiden Profile 2, 3 form- und kraftschlüssig durch Kaltfügen miteinander verbunden sind. Die Verklammerungsstrukturen sind unter Bezug auf die nachfolgenden Figuren 3 bis 5 näher beschrieben.

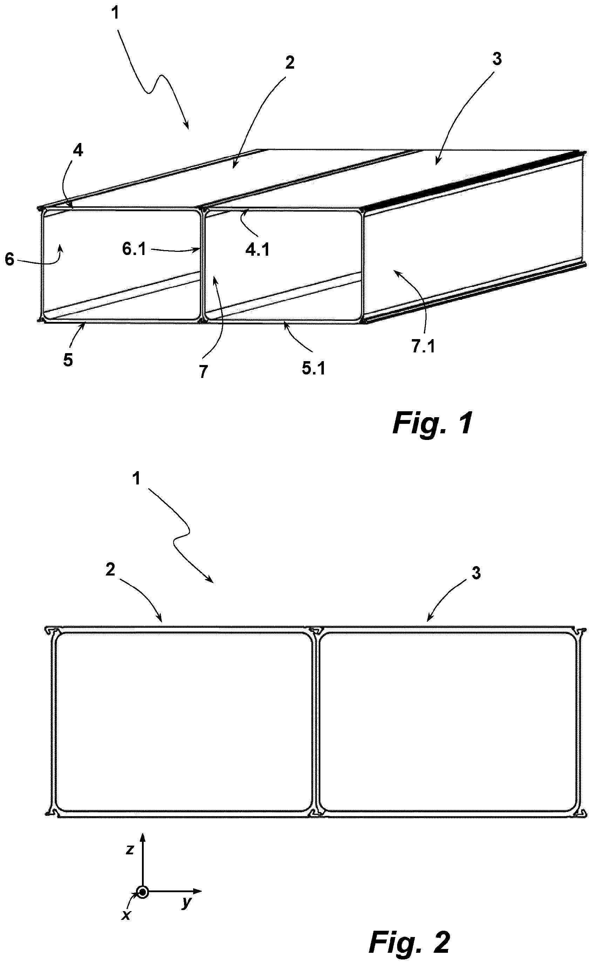

Während Figur 2 den fertiggestellten Profilverbund nach dem Umformen der in Verlängerung der Gurte 4, 4.1, 5, 5.1 angeordneten Verklammerungsstrukturen zeigt, sind in Figur 3 die beiden Profile 2, 3 in einer vergrößerten Darstellung miteinander in Eingriff gestellt, jedoch vor dem Kaltfügen gezeigt. Der Gurt 4.1 des Profils 3 verfügt als Verklammerungsstruktur über einen Verklammerungskopf 8, eine Verriegelungstasche 9 sowie einen Verriegelungswulst 10. Die an den Gurt 4 des Profils 2 angeformte Verklammerungsstruktur ist durch einen Umklammerungsschenkel 11 bereitgestellt. Der jeweils zweite Gurt 5.1 bzw. 5 trägt als Verklammerungsstruktur jeweils die zu der Verklammerungsstruktur des Gurtes 4.1 bzw. 4 komplementäre Verklammerungsstruktur. An den Gurt 5.1 ist als Verklammerungsstruktur daher ein Umklammerungsschenkel 11.1 und an den Gurt 5 ein Verklammerungskopf 8.1 angeformt.

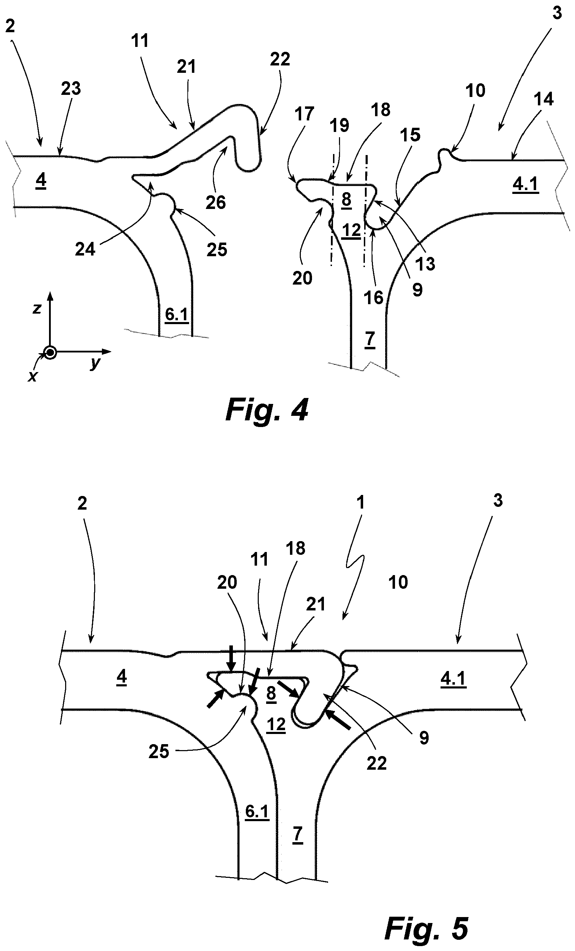

Die Verklammerungsstrukturen sind detaillierter in den Figuren 4 und 5 gezeigt. Der Verklammerungskopf 8 des Profils 3 ist über einen Steg 12 an den Profilsteg 7 angeformt. Der Verklammerungskopf 8 befindet sich in y-Richtung in der Verlängerung des Gurtes 4.1 und ist in Bezug auf die Breite des Steges 12 in y-Richtung beidseitig hinterschnitten. Die Breite des Steges 12 ist in Figur 2 durch zwei voneinander in y-Richtung beabstandete strichpunktierte Linien angedeutet. Durch die zu dem Gurt 4.1 weisende Wand 13 des Verklammerungskopfes 8 und einen Abschnitt des Überganges zwischen dem Gurt 4.1 und dem Profilsteg 7 des Profils 3 ist die Verklammerungstasche 9 eingefasst. Der Verriegelungswulst 10 ragt von der Außenseite 14 des Profils 3 ab. Die die Verklammerungstasche 9 einfassenden Wände 13, 15 sind zueinander in Richtung der Sohle 16 derselben geringfügig aufeinander zulaufend geneigt, mithin reduziert sich die lichte Weite der Verklammerungstasche 9 in Richtung zu ihrer Sohle 16. Durch die geneigte Auslegung der Wand 13 ist der Verklammerungskopf 8 in Richtung zum Gurt 4.1 hin, in z-Richtung wirkend hinterschnitten.

Der andere Überstand des Verklammerungskopfes 8 gegenüber der Breite des Steges 12 ist ebenfalls, einen Scheitel 17 bildend, verjüngt. An der in z-Richtung nach außen weisenden Seite des Verklammerungskopfes 8 ist in die diesbezügliche Seite desselben ein Hinterschnitt 18 eingebracht, der in y-Richtung wirkt. Der Hinterschnitt 18 ist durch eine geneigte Stellfläche 19 gebildet, die in Richtung zu der Verklammerungstasche 9 hin geneigt ist. Damit ist der Abschnitt des Verklammerungskopfes 8, der in z-Richtung mit dem Steg 12 fluchtet, gegenüber dem zu dem Profil 2 weisenden Überstand hin vertieft.

An der Unterseite des zu dem Profil 2 weisenden Überstandes des Verklammerungskopfes 8 ist eine Nut 20 mit gekrümmter Umrissgeometrie als negatives Verriegelungselement eingebracht.

Der Umklammerungsschenkel 11 des Profils 2 ist aus einem ersten Profilarm 21 und einem winklig daran angeformten zweiten Profilarm gebildet.

Der Profilarm 21 ist gegenüber der Außenseite 23 des Profils 2 nach außen hin ausgestellt. Der erste Profilarm 21 weist eine zu der Kontur der in z-Richtung weisenden Außenseite des Verklammerungskopfes 8 des Profils 3 komplementäre Kontur auf. Durch den Umklammerungsschenkel 11 und die nach außen weisende Seite eines gekrümmten Überganges zwischen dem Gurt 4 und dem Profilsteg 6.1 ist eine Verklammerungskopfaufnahme 24 gebildet. Die Verklammerungskopfaufnahme 24 wird durch einen Verriegelungswulst 25 als positives und zu der Nut 20 komplementäres Verriegelungsglied in Richtung zu dem Profilsteg 6.1 begrenzt. Der Verriegelungswulst 25 ist bei dem dargestellten Ausführungsbeispiel mit konstantem Krümmungsradius ausgeführt. Die Ausprägung des Verriegelungswulstes 25 und dementsprechend auch der komplementären Nut 20 ist ausgelegt, damit zwischen den beiden Profilen 2, 3, wenn die komplementären Verklammerungsstrukturen miteinander in Eingriff gestellt sind, diese in z-Richtung und in y-Richtung formschlüssig miteinander verbunden sind. Die Verriegelung in y-Richtung ist clipsartig, sodass die diesbezüglich miteinander in Eingriff gestellten Teile der Verklammerungsstrukturen, wie in Figur 3 gezeigt, für eine Vorfixierung der beiden Profile 2, 3 vor dem Prozess des Kaltfügens sorgen.

Durch die winklig zueinander angeordneten Profilarme 21, 22 ist eine zweite Verklammerungskopfaufnahme 26 bereitgestellt.

Hergestellt wird der Profilverbund 1 durch Kaltfügen, und zwar indem auf die in Eingriff gestellten Umklammerungsstrukturen, wie in Figur 3 angedeutet, zwei Zylinderwalzen wirken, durch die mit entsprechendem Fügedruck - durch die Blockpfeile angedeutet - die Verklammerungsstrukturen dauerhaft verbunden werden. Die durch den Kaltfügeprozess verbundenen Profile 2, 3 sind bezüglich ihrer miteinander in Eingriff gestellten Verklammerungsstrukturen in Figur 5 gezeigt. Durch das Kaltfügen ist der zweite Profilarm 22 in die Verklammerungstasche 9 des ersten Profils 3 eingepresst worden. Die Materialstärke des zweiten Profilarms 22 weist gegenüber der lichten Weite der Verklammerungstasche 9 eine gewisse Übergröße aus. Dadurch bildet sich zwischen den Oberflächen des zweiten Profilarms 22 und den Wänden 13, 15 der Verklammerungstasche 9 jeweils eine metallische Dichtung bei dem Einpressvorgang aus. Bei der Umformung schmiegt sich zudem die zu dem Verklammerungskopf 8 weisende Kontur des ersten Profilarms an die Außenkontur des Verklammerungskopfes 8. Zugleich wird bei dem Kaltfügeprozess, wenn der Umklammerungsschenkel 11 hinreichend umgeformt worden ist, der Verriegelungswulst 10 umgeformt, sodass eine insgesamt ebene Profilaußenseite bereitgestellt ist. Der umgeformte Verriegelungswulst 10 verhindert, dass der in die Verklammerungstasche 9 eintauchende zweite Profilarm 22 des Umklammerungsschenkels 11 aus der Verklammerungstasche 9 selbst bei Anliegen höherer Zugkräfte herausgezogen werden kann. Bei Anliegen einer auf beide Profile 2, 3 wirkenden Zugbelastung in y-Richtung wird der Profilverbund 1 zudem durch den Formschluss zwischen der Außenseite des Verklammerungskopfes 8 und der Innenkontur des ersten Profilarms 21 des Verklammerungsschenkels 11 sicher aufrechterhalten.

Der auf die Außenseite des Umklammerungsschenkels 11 aufgebrachte und auf den Verklammerungskopf 8 wirkende Fügedruck wird auch an den miteinander in Eingriff gestellten Verriegelungsgliedern und somit durch das Eingreifen des Verriegelungswulstes 25 des Profils 2 in die Nut 20 des Profils 3 aufgefangen. Die Darstellung der Figur 5 zeigt, dass der zu dem Profil 2 weisende Überstand des Verklammerungskopfes 8 formschlüssig durch den Hinterschnitt 18 und die beiden Verriegelungsglieder 20, 25 in der Verklammerungskopfaufnahme 24 gehalten ist. Ein unbeabsichtigtes Verstellen der beiden Profile 2, 3 in z-Richtung gegeneinander ist hierdurch wirksam verhindert.

Wird das Kaltfügen mit entsprechendem Druck ausgeführt, was die Regel sein dürfte, bilden sich metallische Dichtungen an den mit den Pfeilen kenntlich gemachten Stellen zwischen den beiden Fügepartnern aus.

Dieser Profilverbund ist nicht nur mechanisch hochbelastbar, sondern ebenfalls mediendicht, ohne dass zwischen den Verklammerungsstrukturen ein zusätzliches Mittel oder eine zusätzliche Masse für die Erzielung einer gewünschten Mediendichtigkeit, insbesondere eine Gasdichtigkeit verwendet werden müsste.

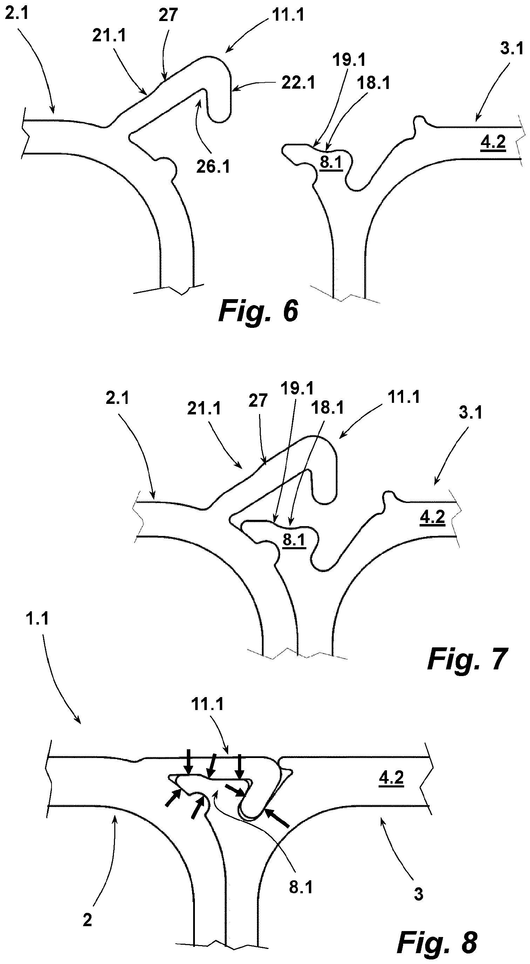

Die Figuren 6 bis 8 zeigen ein weiteres Ausführungsbeispiel eines durch Kaltfügen zweier Profilen 2.1, 3.1 zu erstellenden Profilverbundes 1.1 (siehe Figur 8). Die Verklammerungsstrukturen der beiden Profile 2.1, 3.1 entsprechen grundsätzlich denjenigen, wie diese zu dem vorherigen Ausführungsbeispiel beschrieben sind. Aus diesem Grunde werden, soweit sinnvoll für gleiche Teile dieselben Bezugszeichen, ergänzt um einen Suffix ".1", verwendet. Die vorstehenden Ausführungen gelten entsprechend für das Ausführungsbeispiel der Figuren 6 bis 8. Dieses Ausführungsbeispiel unterscheidet sich in zwei Aspekten von dem zuvor beschriebenen Ausführungsbeispiel. Der Verklammerungskopf 8 des Profils 3.1 ist an seiner zu dem Gurt 4.2 weisenden Seite ebenfalls hinterschnitten, weist jedoch in z-Richtung eine Materialstärke auf, die größer ist als die lichte Weite der durch die beiden Profilarme 21.1, 22.1 bereitgestellten zweiten Verklammerungskopfaufnahme 26.1. Dieses dient dem Zweck, dass bei dem Kaltfügeprozess dieser Teil des Verklammerungskopfes 8.1 umgeformt und in die zweite Verriegelungskopfaufnahme 26.1 eingepresst und damit etwas umgeformt wird. Bei diesem Ausführungsbeispiel ist die zu dem Verklammerungskopf 8 weisende Kontur des ersten Profilarmes 21.1 gerade ausgeführt. Um den durch die Konturierung der Außenseite des Verklammerungskopfes 8.1 gebildeten Hinterschnitt 18.1 zu füllen, trägt der erste Profilarm 21.1 an seiner Außenseite eine Materialverdickung 27. Diese ist ausgelegt, dass im Zuge des Kaltfügepressvorganges Material aus dem ersten Profilarm 21.1 in den Hinterschnitt 19.1 des Verklammerungskopfes 8.1 eingepresst wird. Nach dem Kaltfügevorgang stellt sich auch bei diesem Ausführungsbeispiel der Verbund der komplementären Verklammerungsstrukturen der Profile 2.1, 3.1 ebenso dar, wie zu dem ersten Ausführungsbeispiel beschrieben und in Figur 5 gezeigt (siehe Figur 8). Durch die Umformung des zu dem Gurt 4.2 weisenden Abschnittes des Verklammerungskopfes 8.1 wird eine metallische Dichtung auch zwischen dem Verklammerungskopf 8.1 und den zueinander weisenden Flächen des ersten und zweiten Profilarms 21.1, 22.1 ausgebildet. Die übrigen möglichen Stellen einer metallischen Dichtung sind auch bei diesem Ausführungsbeispiel vorhanden.

In Bezug auf die Figuren sind Ausführungsbeispiele beschrieben worden, bei denen die beiden Profile als geschlossene Profile ausgeführt sind. Eine mediendichte Verbindung der komplementären Verklammerungsstrukturen ist daher nicht notwendigerweise erforderlich. Das beschriebene Konzept des Profilverbundes eignet sich jedoch auch für solche Profilverbindungen, bei denen ebenfalls zwei zweischalige Profile miteinander verbunden sind, jedoch nur eines dieser beiden Profile im Bereich der miteinander in Eingriff gestellten Verklammerungsstrukturen der beiden Gurte einen Profilsteg zum Verbinden der beiden Gurte aufweist. Dann machen sich die besonderen Merkmale hinsichtlich einer durch das Kaltfügen selbsttätig einstellenden Abdichtung besonders gut bemerkbar. Gleiches gilt ebenfalls für den Fall, dass zwei eingurtige Profile miteinander verbunden sind.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dies im Rahmen dieser Ausführungen im Einzelnen näher dargelegt werden müsste.

### Bezugszeichenliste

- 1, 1.1: Profilverbund
- 2, 2.1: Profil
- 3, 3.1: Profil
- 4, 4.1: erster Gurt
- 5, 5.1: zweiter Gurt
- 6, 6.1: Profilsteg
- 7, 7.1: Profilsteg
- 8,8.1: Verklammerungskopf
- 9: Verklammerungstasche
- 10: Verriegelungswulst
- 11, 11.1: Umklammerungsschenkel
- 12: Steg
- 13: Wand
- 14: Außenseite
- 15: Wand
- 16: Sohle
- 17: Scheitel
- 18, 18.1: Hinterschnitt
- 19, 19.1: Stellfläche
- 20: Nut
- 21, 21.1: erster Profilarm
- 22, 22.1: zweiter Profilarm
- 23: Außenseite
- 24: Verklammerungskopfaufnahme
- 25: Verriegelungswulst
- 26, 26.1: Verklammerungskopfaufnahme
- 27: Materialverdickung

## Patentansprüche

1. Profilverbund hergestellt aus einem ersten Profil (3, 3.1) und einem längsseitig mit dem ersten Profil (3, 3.1) durch Kaltfügen verbundenen zweiten Profil (2, 2.1) aus Metall, welche beiden Profile (2, 3; 2.1, 3.1) an ihren zueinander weisenden Längsseiten komplementäre Verklammerungsstrukturen zum Kaltfügen der beiden Profile (2, 3; 2.1, 3.1) durch eine in Profilhochrichtung (z-Richtung) wirkende Fügekraft tragen, wobei das erste Profil (3, 3.1) als Verklammerungsstruktur einen an einem Steg (12) angeformten, durch eine größere Erstreckung in Profilquerrichtung (y-Richtung) in Bezug auf diejenige des Steges (12) zu beiden Seiten des Steges (12) jeweils eine Hinterschneidung bildenden Verklammerungskopf (8, 8.1) und die dazu komplementäre Verklammerungsstruktur des zweiten Profils (2, 2.1) eine Verklammerungskopfaufnahme (24) zur Aufnahme eines Abschnittes des Verklammerungskopfes (8, 8.1) des ersten Profils (3, 3.1) sowie einen angeformten Umklammerungsschenkel (11, 11.1) mit einem vor dem Kaltfügen abragenden ersten Profilarm (21, 21.1) und mit einem zweiten, daran winklig angeformten Profilarm (22, 22.1) aufweisen, dessen freies Ende zum Hintergreifen des Verklammerungskopfes (8, 8.1) vorgesehen ist, wobei das freie Ende des Umklammerungsschenkels (11, 11.1) in dem kaltgefügten Profilverbund (1, 1.1) in die Verklammerungstasche (9), den Verklammerungskopf (8, 8.1) des anderen Profils (3, 3.1) hintergreifend, eingepresst ist, **dadurch gekennzeichnet, dass** die miteinander durch Kaltfügen verbundenen Profile (2, 3; 2.1, 3.1) in Profilhochrichtung (z-Richtung) durch zu den Verklammerungsstrukturen zusätzliche Verriegelungsglieder (20, 25) formschlüssig miteinander in Eingriff gestellt sind, wobei das den Verklammerungskopf (8, 8.1) tragende erste Profil (3, 3.1) an seiner zu dem zweiten Profil (2, 2.1) weisenden und diese kontaktierenden Seite ein erstes Verriegelungsglied (20) und das zweite Profil (2, 2.1) an entsprechender Stelle ein komplementäres, mit dem ersten Verriegelungsglied (20) in Eingriff gestelltes zweites Verriegelungsglied (25) aufweisen, durch welche in Eingriff gestellten Verriegelungsglieder (20, 25) die beiden Profile (2, 3; 2.1, 3.1) in Profilhochrichtung (z-Richtung) formschlüssig miteinander in Eingriff gestellt sind.

2. Profilverbund nach Anspruch 1, **dadurch gekennzeichnet, dass** das zweite Profil (2, 2.1) als Verriegelungsglied einen Verriegelungswulst (25) und das erste Profil (3, 3.1) als Verriegelungsglied eine Verriegelungswulstaufnahme (20) mit zu dem Verriegelungswulst (25) komplementärer Querschnittsgeometrie aufweisen.

3. Profilverbund nach Anspruch 2, **dadurch gekennzeichnet, dass** der Verriegelungswulst (25) eine insbesondere mit gleichbleibendem Krümmungsradius gekrümmte Mantelfläche aufweist.

4. Profilverbund nach einem der Ansprüche 1 bis 3, **dadurch gekennzeichnet, dass** das Verriegelungsglied (25) des zweiten Profils (2, 2.1) an der dem Umklammerungsschenkel (11, 11.1) gegenüberliegenden Wand der Verklammerungskopfaufnahme (24) angeordnet ist.

5. Profilverbund nach Anspruch 4, **dadurch gekennzeichnet, dass** die Verklammerungskopfaufnahme (24) des zweiten Profils (2, 2.1) durch das Verriegelungsglied (25) begrenzt ist.

6. Profilverbund nach einem der Ansprüche 1 bis 5, **dadurch gekennzeichnet, dass** in die zur Profilaußenseite (z-Richtung) weisende Seite des Verklammerungskopfes (8, 8.1) ein in Profilquerrichtung (y-Richtung) wirkender Hinterschnitt (18, 18.1) eingebracht ist, in den infolge der Erstellung des Profilverbundes (1, 1.1) durch den Kaltfügeprozess Material des Umklammerungsschenkels (11, 11.1), den Hinterschnitt füllend, eingreift.

7. Profilverbund nach Anspruch 6, **dadurch gekennzeichnet, dass** der Hinterschnitt (18, 18.1) des Verklammerungskopfes (8, 8.1) des ersten Profils (3, 3.1) einseitig in Richtung zu dem zweiten Profil (2, 2.1) wirkt.

8. Profilverbund nach Anspruch 7, **dadurch gekennzeichnet, dass** die den Hinterschnitt (18.1) des Verklammerungskopfes (8.1) bildende Kontur dergestalt geneigt ist, dass durch diese eine Stellfläche (19.1) gebildet ist, durch die beim Einpressen von Material des Umklammerungsschenkels (11.1) in den Hinterschnitt (18.1) ein auf den Verklammerungskopf (8.1) wirkendes Kraftmoment in Richtung zu dem zweiten Profil eingekoppelt wird.

9. Profilverbund nach einem der Ansprüche 6 bis 8, **dadurch gekennzeichnet, dass** an der Außenseite des Umklammerungsschenkels (11.1) eine Materialvorgabe (28) zum Einpressen in den Hinterschnitt (18.1) des Verklammerungskopfes (8.1) angeformt ist.

10. Profilverbund nach Anspruch 9, **dadurch gekennzeichnet, dass** die Materialvorgabe durch eine Materialaufdickung (27) bereitgestellt ist.

11. Profilverbund nach einem der Ansprüche 1 bis 10, **dadurch gekennzeichnet, dass** durch den Umklammerungsschenkel (11, 11.1) durch die Anordnung seines zweiten, winklig an den ersten Profilarm (21, 21.1) angeformten Profilarms (22, 22.1) eine zweite Verklammerungskopfaufnahme (26, 26.1) ausgebildet ist, deren lichte Weite kleiner ist als die Materialstärke des zu dem ersten Profil (3, 3.1) weisenden, hinterschnittenen Abschnittes des Verklammerungskopfes (8, 8.1).

12. Profilverbund nach Anspruch 11, **dadurch gekennzeichnet, dass** die größere Materialstärke des hinterschnittenen Abschnitts des Verklammerungskopfes (8, 8.1) durch eine an seiner zur Außenseite des Profils (3, 3.1) weisenden Seite vorgesehenen Materialvorgabe bereitgestellt ist.

13. Profilverbund nach einem der Ansprüche 1 bis 9, **dadurch gekennzeichnet, dass** die Verklammerungstasche (9) des ersten Profils (2, 2.1) durch in Richtung zu ihrer Sohle (16) aufeinander zulaufende, geneigte Seitenwände (13, 15) eingefasst ist.

14. Profilverbund nach einem der Ansprüche 1 bis 13, **dadurch gekennzeichnet, dass** an den dem Verklammerungsschenkel (11, 11.1) bezüglich der Verklammerungskopfaufnahme (24) gegenüberliegenden Schenkel des zweiten Profils (2, 2.1) ein Profilsteg (6.1) angeformt ist.

15. Profilverbund nach einem der Ansprüche 1 bis 14, **dadurch gekennzeichnet, dass** an den den Verklammerungskopf (8, 8.1) des ersten Profils (3, 3.1) tragenden Steg (12) ein Profilsteg (7) angeformt ist.

## Claims

1. Profile arrangement produced from a first profile (3, 3.1) and a second profile (2, 2.1) made of metal and connected to the first profile (3, 3.1) on the longitudinal sides by cold joining, said two profiles (2, 3; 2.1, 3.1) bearing complementary interlocking structures on their mutually facing longitudinal sides for the cold joining of the two profiles (2, 3; 2.1, 3.1) by means of a joining force taking effect in a vertical profile direction (z-direction), wherein the first profile (3, 3.1) has an interlocking structure in the form of an clamping head (8, 8.1) formed on a web (12) and, by having a greater extension in the transverse direction (y-direction) of the profile in comparison with that of the web (12), forms a respective undercut on both sides of the web (12), and the complementary interlocking structure of the second profile (2, 2.1) has an clamping-head receptacle (24) for receiving a portion of the clamping head (8, 8.1) of the first profile (3, 3.1) and also has an integrally formed engaging limb (11, 11.1) having a first profile arm (21, 21.1) which is in a projecting state prior to the cold-joining operation, and having a second profile arm (22, 22.1) which is formed at an angle on the first profile arm and the free end of which is intended for engaging behind the clamping head (8, 8.1), wherein, in the cold-joined interconnected-profile arrangement (1, 1.1), the free end of the engaging limb (11, 11.1) has been pressed into an interlocking pocket (9), engaging behind the clamping head (8, 8.1) of the other profile (3, 3.1), **characterized in that** the profiles (2, 3; 2.1, 3.1) connected to one another by cold-joining, in the vertical profile direction (z-direction) are brought into engagement with one another in a form-fitting manner (positive fit) by locking members (20, 25) which are additional to the interlocking structures, wherein the first profile (3, 3.1) carrying the clamping head (8, 8.1), comprises, on its side facing towards the second profile (2, 2.1) and on the side contacting this profile, a first locking member (20), and the second profile (2, 2.1) comprises, at the corresponding location, a complementary second locking member (25) which engages with the first locking member (20), by means of which locking members (20, 25), when brought into engagement, the two profiles (2, 3; 2.1, 3.1) are brought into form-fitting (positive) engagement with one another in the vertical profile direction (z-direction).

2. Profile arrangement according to claim 1, **characterised in that** the second profile (2, 2.1) comprises, as a locking member, a locking beading (25), and the first profile (3, 3.1) comprises, as a locking member, a locking beading receptacle (20), with a cross-section geometry complementary to the locking beading (25).

3. Profile arrangement according to claim 2, **characterised in that** the locking beading (25) comprises a curved outer surface, in particular with a constant curvature radius.

4. Profile arrangement according to any one of claims 1 to 3, **characterised in that** the locking member (25) of the second profile (2, 2.1) is arranged on the wall of the clamping head receptacle (24) opposite the engaging limb (11, 11.1).

5. Profile arrangement according to claim 4, **characterised in that** the interlocking-head receptacle (24) of the second profile (2, 2.1) is delimited by the locking member (25).

6. Profile arrangement according to any one of claims 1 to 5, **characterised in that** an undercut (18, 18.1) is introduced into the side of the clamping head (8, 8.1) facing towards the profile outer side (z-direction), which takes effect in the profile transverse direction (y-direction), into which, as a result of the position of the profile arrangement (1, 1.1), and due to the cold-joining process, material of the engaging limb (11, 11.1) engages, filling the undercut.

7. Profile arrangement according to claim 6, **characterised in that** the undercut (18, 18.1) of the clamping head (8, 8.1) of the first profile (3, 3.1) takes effect on one side in the direction towards the second profile (2, 2.1).

8. Profile arrangement according to claim 7, **characterised in that** the contour forming the undercut (18.1) of the clamping head (8.1) is inclined to form a locating surface (19.1) through which, when the material from the engaging limb (11.1) is pressed into the undercut (18.1), a moment of force acting on the clamping head (8.1) is coupled in the direction of the second profile.

9. Profile arrangement according to any one of claims 6 to 8, **characterised in that** a material projection (28) is formed on the outside of the engaging limb (11.1), for pressing into the undercut (18.1) of the clamping head (8.1).

10. Profile arrangement according to claim 9, **characterised in that** the material projection is provided by an area of material thickening (27).

11. Profile arrangement according to any one of claims 1 to 10, **characterised in that** a second clamping-head receptacle (26, 26.1) is formed by the engaging limb (11, 11.1) by way of the arrangement of its second profile arm (22, 22.1), formed at an angle to the first profile arm (21, 21.1), of which the clear width is smaller than the material thickness of the undercut section of the clamping head (8, 8.1) facing towards the first profile (3, 3.1).

12. Profile arrangement according to claim 11, **characterised in that** the greater material thickness of the undercut section of the clamping head (8, 8.1) is provided by a material projection provided on its side facing towards the outside of the profile (3, 3.1).

13. Profile arrangement according to any one of claims 1 to 9, **characterised in that** the interlocking pocket (9) of the first profile (2, 2.1) is surrounded by inclined side walls (13, 15) running towards one another and inclined in the direction towards its base (16).

14. Profile arrangement according to any one of claims 1 to 13, **characterised in that** a profile web (6.1) is formed on the limb of the second profile (2, 2.1) located on the engaging limb (11, 11.1) located opposite in relation to the clamping-head receptacle (24).

15. Profile arrangement according to any one of claims 1 to 14, **characterised in that** a profile web (7) is formed on the web (12) carrying the clamping head (8, 8.1) of the first profile (3, 3.1).

## Revendications

1. Assemblage de profilés réalisé avec un premier profilé (3, 3.1) et un second profilé (2, 2.1) en métal assemblé longitudinalement par jointage à froid avec le premier profilé (3, 3.1), lesquels deux profilés (2, 3 ; 2.1, 3.1) présentent chacun sur leur faces longitudinales orientées l'une vers l'autre des structures de cramponnage complémentaires destinées à réaliser le jointage à froid des deux profilés (2, 3 ; 2.1, 3.1) au moyen d'une force de jointage agissant dans le sens de la hauteur du profilé (sens z), le premier profilé (3, 3.1) présentant, en guise de structure de cramponnage, une tête d'accrochage (8, 8.1) moulée sur un montant (12), formant au moyen d'une étendue plus grande dans le sens transversal du profilé (sens y) par rapport à l'étendue du montant (12), respectivement une contre-découpe vers chacun des deux côtés du montant (12) et la structure de cramponnage du second profilé (2, 2.1) complémentaire à la précédente présentant un logement (24) de tête d'accrochage destiné à recevoir un tronçon de la tête d'accrochage (8, 8.1) du premier profilé (3, 3.1) ainsi qu'une patte de crochetage (11, 11.1) moulée avec un premier bras (21, 21.1) de profilé en saillie avant le jointage à froid, et avec un second bras (22, 22.1) de profilé moulé sur celle-ci de manière angulaire, dont l'extrémité libre est prévue pour saisir par l'arrière la tête d'accrochage (8, 8.1), l'extrémité libre de la patte de crochetage (11, 11.1) dans l'assemblage de profilés jointé à froid étant enfoncée dans la poche de cramponnage (9), en saisissant par l'arrière la tête d'accrochage (8, 8.1) de l'autre profilé (3, 3.1), **caractérisé en ce que** les profilés (2, 3 ; 2.1, 3.1) reliés l'un avec l'autre dans le sens de la hauteur du profilé (sens z) par le jointage à froid sont engagés l'un dans l'autre par complémentarité de forme grâce à des éléments de verrouillage (20, 25) qui viennent s'ajouter aux structures d'accrochage, le premier profilé (3, 3.1) qui supporte la tête d'accrochage (8, 8.1) présentant sur son côté orienté vers le second profilé (2, 2.1) et en contact avec ce dernier, un premier élément de verrouillage (20) et le second profilé (2, 2.1) présentant à l'endroit correspondant un second élément de verrouillage (25) complémentaire, engagé avec le premier élément de verrouillage (20), par lesquels éléments de verrouillage (20, 25), engagés l'un dans l'autre, les deux profilés (2, 3 ; 2.1, 3.1) sont engagés l'un dans l'autre par complémentarité de forme dans le sens de la hauteur (sens z) du profilé.

2. Assemblage de profilés selon la revendication 1, **caractérisé en ce que** le second profilé (2, 2.1) présente en tant qu'élément de verrouillage, un bourrelet de verrouillage (25) et le premier profilé (3, 3.1) présente en tant qu'élément de verrouillage, un logement (20) de bourrelet de verrouillage avec une géométrie de section complémentaire au bourrelet de verrouillage (25).

3. Assemblage de profilés selon la revendication 2, **caractérisé en ce que** le bourrelet de verrouillage (25) présente une surface d'enveloppe courbée, notamment avec un rayon de courbure constant.

4. Assemblage de profilés selon l'une des revendications 1 à 3, **caractérisé en ce que** l'élément de verrouillage (25) du second profilé (2, 2.1) est disposé sur la paroi du logement (24) de tête d'accrochage opposée à la patte de crochetage (11, 11.1).

5. Assemblage de profilés selon la revendication 4, **caractérisé en ce que** le logement (24) de tête d'accrochage du second profilé (2, 2.1) est limité par l'élément de verrouillage (25).

6. Assemblage de profilés selon l'une des revendications 1 à 5, **caractérisé en ce qu'**une contre-découpe (18, 18.1) agissant dans le sens transversal du profilé (sens y) est aménagée dans le côté de la tête d'accrochage (8, 8.1) orienté vers la face externe du profilé (sens z), dans laquelle contre-découpe (18, 18.1) s'engage, à la suite de la réalisation de l'assemblage de profilés (1, 1.11) grâce au processus de jointage à froid, le matériau de la patte de crochetage (11, 11.1), en remplissant la contre-découpe.

7. Assemblage de profilés selon la revendication 6, **caractérisé en ce que** la contre-découpe (18, 18.1) de la tête d'accrochage (8, 8.1) du premier profilé (3, 3.1) agit unilatéralement en direction du second profilé (2, 2.1).

8. Assemblage de profilés selon la revendication 7, **caractérisé en ce que** le contour constituant la contre-découpe (18.1) de la tête d'accrochage (8.1) est incliné de telle sorte que celle-ci forme une surface d'ajustage (19.1), par laquelle un moment de force agissant sur la tête d'accrochage (8.1) lors de l'enfoncement du matériau de la patte de crochetage (11.1) dans la contre-découpe (18.1) entraîne un couplage en direction du second profilé.

9. Assemblage de profilés selon l'une des revendications 6 à 8, **caractérisé en ce qu'**une réserve de matériau (28) est moulée sur la face extérieure de la patte de crochetage (11.1) pour être enfoncée dans la contre-découpe (18.1) de la tête d'accrochage (8.1).

10. Assemblage de profilés selon la revendication 9, **caractérisé en ce que** la réserve de matériau est mise à disposition par un épaississement (27) de matériau.

11. Assemblage de matériau selon l'une des revendications 1 à 10, **caractérisé en ce qu'**au moyen de la patte de crochetage (11, 11.1), en disposant un second bras de profilé (22, 22.1) moulé avec un angle sur le premier bras de profilé (21, 21.1), est formé un second logement (26, 26.1) de tête d'accrochage, dont la largeur d'ouverture est plus petite que l'épaisseur du matériau du tronçon contre-découpé de la tête d'accrochage (8, 8.1), orienté vers le premier profilé (3, 3.1).

12. Assemblage de profilés selon la revendication 11, **caractérisé en ce que** la plus forte épaisseur du matériau du tronçon contre-découpé de la tête d'accrochage (8, 8.1) est mise à disposition par une réserve de matériau prévue sur son côté orienté vers la face extérieure du profilé (3, 3.1).

13. Assemblage de profilés selon l'une des revendications 1 à 9, **caractérisé en ce que** la poche de cramponnage (9) du premier profilé (2, 2.1) est enserrée par des parois latérales (13, 15) inclinées, se rapprochant l'une de l'autre en direction de leur base (16).

14. Assemblage de profilés selon l'une des revendications 1 à 13, **caractérisé en ce qu'**une une aile de profilé (6.1) est moulée sur la patte du second profilé (2, 2.1), laquelle est opposée à la patte de crochetage (11, 11.1) par rapport au logement (24) de tête d'accrochage.

15. Assemblage de profilés selon l'une des revendications 1 à 14, **caractérisé en ce qu'**une aile de profilé (7) est moulée sur le montant (12) supportant la tête d'accrochage (8, 8.1) du premier profilé (3, 3.1).
